# EUROPÄISCHE PATENTANMELDUNG

(11) **EP 1 230 858 A2**
(43) Veröffentlichungstag der Anmeldung: **14.08.2002**
(21) Anmeldenummer: 02002985.6
(22) Anmeldetag: 11.02.2002
(51) Int. Cl.: A22C 11/02

(54) **Abfüllvorrichtung**

(30) Priorität: 13.02.2001 DE 20102457 U
(71) Anmelder: Heinrich Frey Maschinenbau GmbH, 89542 Herbrechtingen-Bolheim (DE)
(72) Erfinder:
(74) Vertreter: Manitz, Finsterwald & Partner GbR

(57) **Zusammenfassung**

Die Erfindung betrifft eine Vorrichtung zum portionierenden Abfüllen von pastösen Produkten, insbesondere zum Abfüllen von Wurstbrät in Naturoder Kunstdärme, mit wenigstens einem an einem Ende beschickbaren drehbaren Füllrohr, auf das ein Darm aufziehbar ist und das am entgegengesetzten Ende eine Abgabeöffnung aufweist, wobei eine Wursthalteeinrichtung mit einem dem Füllrohr nachgeordneten und sich in Füllrichtung erweiternden Wurstausgabekanal vorgesehen ist.

## Beschreibung

Die Erfindung betrifft eine Vorrichtung zum portionierenden Abfüllen von pastösen Produkten, insbesondere zum Abfüllen von Wurstbrät in Naturoder Kunstdärme, mit wenigstens einem an einem Ende beschickbaren drehbaren Füllrohr, auf das ein Darm aufziehbar ist und das am entgegengesetzten Ende eine Abgabeöffnung aufweist.

Bei derartigen Abfüllvorrichtungen besteht die Gefahr, daß sich der gerade gefüllte Darmabschnitt mitdreht, wenn das Füllrohr nach Abgabe einer Produktportion in den Darm gedreht wird, um durch diesen Abdrehvorgang die einzelnen Portionen voneinander zu trennen und so einzelne Würste herzustellen. Durch dieses Mitdrehen des gefüllten Darmabschnitts können unerwünschte Mehrfachwürste entstehen.

Eine bekannte Möglichkeit zur Vermeidung dieses Problems besteht darin, daß eine Bedienperson jeweils die im Entstehen befindliche Wurst durch die Hand gleiten läßt und während des Abdrehvorgangs ein Drehen der Wurst verhindert. Diese rein manuelle Lösung ist personalintensiv und daher unwirtschaftlich.

Es ist auch bekannt, im Anschluß an die Abgabeöffnung ein Paar von zueinander verstellbaren Halterollen anzuordnen, zwischen denen die zuletzt gefüllte Wurst hindurchläuft und deren Abstand auf den Darmdurchmesser derart abgestimmt wird, daß die Rollen ein Drehen der Wurst während des Abdrehvorgangs verhindern. Die Einstellung des optimalen Rollenabstands ist jedoch schwierig, da ein zu geringer Abstand zum Platzen der Wurst führen kann und bei einem zu großen Abstand der Halteeffekt zu gering ist. Aus diesem Grund wird in der Praxis das Rollenpaar wiederum manuell unterstützt, indem beim Abdrehen die zuletzt gefüllte Wurst trotz des vorhandenen Rollenpaares zusätzlich von einer Bedienperson mit der Hand am Drehen gehindert wird.

Aufgabe der Erfindung ist es, eine Vorrichtung der eingangs genannten Art auf möglichst einfache Weise derart weiterzubilden, daß die Gefahr eines Mitdrehens des gefüllten Darmabschnitts beseitigt oder zumindest stark reduziert ist.

Die Lösung dieser Aufgabe erfolgt durch die Merkmale des Anspruchs 1 und insbesondere dadurch, daß eine Wursthalteeinrichtung vorgesehen ist, die einen dem Füllrohr nachgeordneten und sich in Füllrichtung erweiternden Wurstausgabekanal aufweist.

Erfindungsgemäß befindet sich in Füllrichtung hinter dem Füllrohr ein Wurstausgabekanal, der sich in Füllrichtung erweitert. In dem Wurstausgabekanal kann sich der Darmabschnitt, der gerade gefüllt wird, derart gegen ein Verdrehen verklemmen, daß dann, wenn das Füllrohr zusammen mit dem darauf aufgezogenen, noch nicht gefüllten Darm gedreht wird, sich die im Wurstausgabekanal festgehaltene Wurst nicht mitdrehen kann.

Die erfindungsgemäß vorgesehene Wursthalteeinrichtung mit dem sich in Füllrichtung erweiternden Wurstausgabekanal dient als Verdrehsicherung für die gefüllten Würste und somit als eine Abdrehhilfe, die ohne Personaleinsatz sichere Abdrehvorgänge gewährleistet und die Bildung unerwünschter Mehrfachwürste vermeidet. Die Funktionalität der Abfüllvorrichtung wird durch die Erfindung somit auf einfache Weise erhöht. Im Anschluß an die Wursthalteeinrichtung kann ggfls. eine zusätzliche Halterollenanordnung, z.B. ein Paar von Halterollen vorgesehen sein.

Aufgrund der Erweiterung oder Aufweitung des Wurstausgabekanals in Füllrichtung kann sich die im Entstehen befindliche Wurst in dem durch den Wurstausgabekanal vorgegebenen Ausmaß radial ausdehnen. Hierdurch wird der Füllvorgang begünstigt, so daß mit der erfindungsgemäß vorgesehenen Wursthalteeinrichtung hohe Abfüllgeschwindigkeiten erreicht werden können.

Vorzugsweise erweitert sich der Wurstausgabekanal trichterartig oder konusartig. Dabei kann der Wurstausgabekanal von einem einzigen Trichter oder Konus mit konstantem Öffnungswinkel gebildet werden.

Der Öffnungswinkel des Wurstausgabekanals ist in einer bevorzugten Ausführung der Erfindung kleiner als 10° und liegt insbesondere etwa im Bereich von 5 bis 8°.

Alternativ ist es auch möglich, daß sich der Wurstausgabekanal abschnittsweise trichterartig oder konusartig erweitert und insbesondere einen kurzen Abschnitt mit großem Öffnungswinkel aufweist, an den sich ein langer Abschnitt mit kleinem Öffnungswinkel anschließt.

Vorzugsweise liegt das Verhältnis von Eintrittsinnendurchmesser zu Austrittsinnendurchmesser des Wurstausgabekanals etwa im Bereich von 0,4 bis 0,8, insbesondere im Bereich von 0,5 bis 0,7.

Erfindungsgemäß ist es möglich, aber nicht erforderlich, daß die Wursthalteeinrichtung oder der Wurstausgabekanal eine Länge aufweist, die etwa einer Wurstlänge entspricht.

Des weiteren ist vorzugsweise vorgesehen, daß die Wursthalteeinrichtung einen dem Wurstausgabekanal vorgelagerten und sich in Richtung des Wurstausgabekanals verjüngenden Eingangsbereich aufweist. Die Wursthalteeinrichtung kann dabei z.B. aus zwei gegensinnig angeordneten Trichtern bestehen.

In einer weiteren bevorzugten Ausgestaltung der Erfindung ist die Innenwand des Wurstausgabekanals als Gleitfläche ausgebildet.

Hierzu kann erfindungsgemäß die Innenwand mit einer geeigneten Beschichtung z. B. aus Teflon oder einem anderen Material mit geringem Reibwiderstand versehen sein. Alternativ oder zusätzlich können Mittel zum Einbringen eines Gleitmediums in den Wurstausgabekanal vorgesehen sein. Als Gleitmedium dient vorzugsweise Wasser.

Hierdurch kann der Widerstand, welcher der im Entstehen befindlichen Wurst in Füllrichtung von der Halteeinrichtung entgegengesetzt wird, noch weiter reduziert werden auf ein Maß, das beim Abdrehen einerseits ein Festhalten der Wurst gegen ein Verdrehen gewährleistet und andererseits eine besonders hohe Abfüllgeschwindigkeit ermöglicht.

Zum Einbringen des Gleitmediums in den Wurstausgabekanal ist vorzugsweise wenigstens ein Zufuhrkanal vorgesehen, der bevorzugt geneigt zur Längsachse des Wurstausgabekanals und insbesondere mit einer der Füllrichtung entgegengesetzten Komponente auf den Wurstausgabekanal zu verläuft. Alternativ kann der Zufuhrkanal auch mit einer Komponente in Füllrichtung auf den Wurstausgabekanal zu verlaufen.

Die Wursthalteeinrichtung ist vorzugsweise einstückig ausgebildet. Als Material zur Herstellung der Wursthalteeinrichtung dient beispielsweise Kunststoff oder Edelstahl.

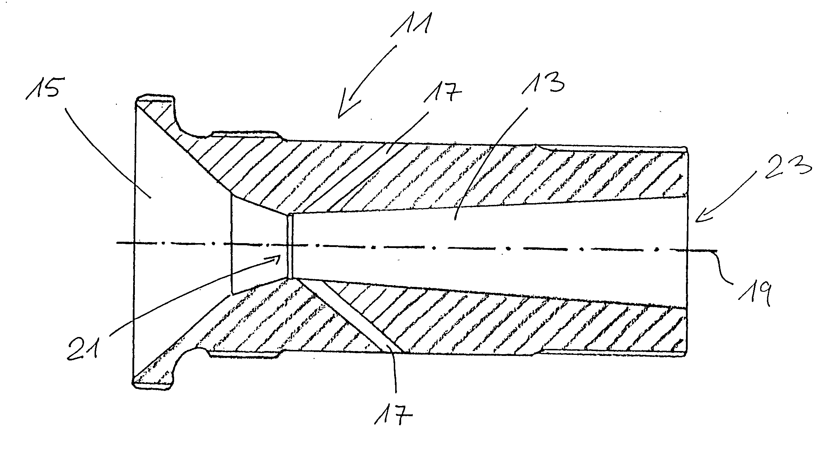

Weitere bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben, deren einzige Figur in einer geschnittenen Seitenansicht eine Ausführungsform einer erfindungsgemäßen Wursthalteeinrichtung für eine Abfüllvorrichtung zeigt.

Die in der Figur dargestellte, rohrförmige Wursthalteeinrichtung 11 ist einstückig ausgebildet und besteht beispielsweise aus Kunststoff.

Die Halteeinrichtung 11 umfaßt einen abschnittsweise trichterförmig ausgebildeten Eingangsbereich 15, der sich in Füllrichtung verjüngt und in einen sich in Füllrichtung erweiternden Wurstausgabekanal 13 übergeht.

Der sich trichterförmig oder konusförmig erweiternde Ausgabekanal 13 weist einen konstanten Öffnungswinkel auf, der kleiner als der Öffnungswinkel der beiden Trichterabschnitte des Eingangsbereiches 15 ist und vorzugsweise etwa 5 bis 8° beträgt.

In der Wandung der Wursthalteeinrichtung 11 sind Zufuhrkanäle 17 ausgebildet, die geneigt zur Längsachse 19 des Ausgabekanals 13 und mit einer der Füllrichtung entgegengesetzten Komponente auf den Ausgabekanal 13 zu verlaufen. Die Zufuhrkanäle 17 münden in den Ausgabekanal 13 in einem Bereich nahe der Eintrittsöffnung. Über die Zufuhrkanäle 17 kann ein Gleitmedium z.B. in Form von Wasser zugeführt werden, um an der Innenwand des Ausgabekanals 13 eine Gleitschicht zu bilden. Zufuhrkanäle für das Gleitmedium können auch an anderer Stelle in den Ausgabekanal 13 münden.

Die Wursthalteeinrichtung 11 ist Bestandteil einer Vorrichtung zum Abfüllen von Wurstbrät in Natur- oder Kunstdärme, kann grundsätzlich aber auch zum Abfüllen anderer pastöser Produkte in Därme oder andere Umhüllungen verwendet werden.

Im Betrieb der Abfüllvorrichtung ragt ein an einem Ende beschickbares drehbares Füllrohr in den Eingangsbereich 15 der Halteeinrichtung 11 hinein. Die Halteeinrichtung 11 ist an der Abfüllvorrichtung relativ zum Füllrohr unverdrehbar angebracht. Eine im Bereich der Abgabeöffnung angeordnete, elastische Dichtlippe des Füllrohres bildet zusammen mit der Innenwand im Eingangsbereich 15 eine Darmbremse. Die Bremskraft ist durch axiales Verstellen des Füllrohres und der Halteeinrichtung 11 relativ zueinander einstellbar. Ein auf das Füllrohr aufgezogener Darm wird mit dem aus der Abgabeöffnung des Füllrohrs austretenden Produkt gefüllt und dadurch vom Füllrohr abgezogen und durch die Darmbremse hindurchgezogen, wobei die Darmspannung mittels der Darmbremse einstellbar ist. Der Darm kann in einem gerafften Zustand auf das Füllrohr aufgezogen werden.

Der Durchmesser der Eintrittsöffnung im Eintrittsbereich 21 des Wurstausgabekanals 13 entspricht etwa dem Durchmesser des Füllrohres. Die Austrittsöffnung im Austrittsbereich 23 ist an den Darmdurchmesser angepaßt und - wenn eine nachgeordnete Halterollenanordnung verwendet wird - auf die Wurstdurchlaßöffnung der Rollenanordnung abgestimmt. Diese Abstimmung erleichtert die Einstellung der Rollenanordnung und vermeidet dadurch zu hohe Belastungen der gefüllten Wurst, so daß die Darmplatzgefahr an der Rollenanordnung minimiert und eine hohe Ausbeute an ordnungsgemäß gefüllten Würsten erzielt wird.

Die im Entstehen befindliche Wurst wird durch die vom Eintrittsbereich 21 und ggfls. von dem sich daran anschließenden Bereich des Wurstausgabekanals 13 gebildete Engstelle gegen ein Verdrehen festgehalten. Dabei besteht - anders als an einer Rollenanordnung - zwischen dem gefüllten Darmabschnitt und der Kanalinnenwand ein flächiger Kontakt, so daß es zu keinem Produktstau in Füllrichtung kommen kann und keine Darmplatzgefahr besteht. Wenn nach Abgabe einer vorbestimmten Produktmenge in den Darm das Füllrohr zusammen mit der noch ungefüllten Darmraupe relativ zur Halteeinrichtung 11 verdreht wird, um eine Portion oder Wurst zu bilden, dann kann sich bei diesem Abdrehvorgang die gerade gebildete und in der Halteeinrichtung 11 festgeklemmte Wurst nicht mitdrehen. Die Bildung von Mehrfachwürsten wird auf diese Weise sicher verhindert.

Die trichter- oder konusartige Aufweitung oder Erweiterung des Ausgabekanals 13 sorgt dafür, daß der Füllvorgang begünstigt wird und hohe Abfüllgeschwindigkeiten erzielt werden können. Durch die Schmierung des Ausgabekanals 13 mittels des über die Zufuhrkanäle 17 einbringbaren Wassers oder eines anderen Gleitmediums kann der Widerstand des Ausgabekanals 13 in Füllrichtung weiter herabgesetzt werden, ohne die Verdrehsicherungsfunktion der Halteeinrichtung 11 zur Sicherstellung definierter Abdrehvorgänge zu beeinträchtigen.

Aufgrund der erfindungsgemäßen Aufweitung des Ausgabekanals 13 kann der Verbrauch an Gleitmedium gering gehalten werden. Insbesondere ist es erfindungsgemäß möglich, das Gleitmedium stoßweise und entsprechend der Wurstfolge getaktet in den Ausgabekanal 13 einzubringen, wodurch der Gleitmittelverbrauch minimiert wird.

Die Länge des Wurstausgabekanals 13 kann beispielsweise im Bereich von 75 bis 85 mm liegen. Die axiale Länge des Eingangsbereiches 15 liegt beispielsweise im Bereich von 25 bis 35 mm. Der Öffnungswinkel des äußeren Trichterabschnitts des Eingangsbereiches 15 beträgt z. B. 80 bis 90°, während der Öffnungswinkel des inneren Trichterabschnitts des Eingangsbereiches 15 beispielsweise im Bereich von 35 bis 45° liegt. Der von zwei einander diametral gegenüberliegenden Zufuhrkanälen 17 eingeschlossene Winkel liegt beispielsweise im Bereich von 75 bis 85°.

Mögliche Werte für die Eintrittsöffnung und die Austrittsöffnung des Ausgabekanals 13 sind beispielsweise in einer Variante etwa 17 mm (Eintritt) und etwa 26 mm (Austritt) und etwa 13 mm (Eintritt) und etwa 23 mm (Austritt) in einer weiteren Variante. Das Verhältnis von Innendurchmesser der Eintrittsöffnung zu Innendurchmesser der Austrittsöffnung des Ausgabekanals 13 liegt vorzugsweise im Bereich von 0,4 bis 0,8, insbesondere von 0,5 bis 0,7.

Die vorstehend genannten Größenangaben sind als Beispielswerte anzusehen und können auch von den Beispielen abweichende Werte annehmen.

### Bezugszeichenliste

- 11: Wursthalteeinrichtung
- 13: Wurstausgabekanal
- 15: Eingangsbereich
- 17: Zufuhrkanal
- 19: Längsachse
- 21: Eintrittsbereich
- 23: Austrittsbereich

## Patentansprüche

1. Vorrichtung zum portionierenden Abfüllen von pastösen Produkten, insbesondere zum Abfüllen von Wurstbrät in Natur- oder Kunstdärme, mit wenigstens einem an einem Ende beschickbaren drehbaren Füllrohr, auf das ein Darm aufziehbar ist und das am entgegengesetzten Ende eine Abgabeöffnung aufweist, **gekennzeichnet durch**
eine Wursthalteeinrichtung (11) mit einem dem Füllrohr nachgeordneten und sich in Füllrichtung erweiternden Wurstausgabekanal (13).

2. Vorrichtung nach Anspruch 1,
**dadurch gekennzeichnet,**
**daß** das Füllrohr relativ zur Wursthalteeinrichtung (11) verdrehbar ist, wobei bevorzugt die Wursthalteeinrichtung (11) relativ zum Füllrohr unverdrehbar angeordnet ist.

3. Vorrichtung nach Anspruch 1 oder 2,
**dadurch gekennzeichnet,**
**daß** sich der Wurstausgabekanal (13) trichterartig oder konusartig erweitert.

4. Vorrichtung nach einem der vorhergehenden Ansprüche,
**dadurch gekennzeichnet,**
**daß** sich der Wurstausgabekanal abschnittsweise trichterartig oder konusartig erweitert und insbesondere einen kurzen Abschnitt mit großem Öffnungswinkel aufweist, an den sich ein langer Abschnitt mit kleinem Öffnungswinkel anschließt.

5. Vorrichtung nach einem der vorhergehenden Ansprüche,
**dadurch gekennzeichnet,**
**daß** das Verhältnis von Eintrittsinnendurchmesser zu Austrittsinnendurchmesser des Wurstausgabekanals (13) etwa im Bereich von 0,4 bis 0,8, vorzugsweise von 0,5 bis 0,7 liegt.

6. Vorrichtung nach einem der vorhergehenden Ansprüche,
**dadurch gekennzeichnet,**
**daß** der Innendurchmesser im Eintrittsbereich (23), insbesondere der Eintrittsöffnung des Wurstausgabekanals (13) zumindest im wesentlichen dem Durchmesser des Füllrohres entspricht.

7. Vorrichtung nach einem der vorhergehenden Ansprüche,
**dadurch gekennzeichnet,**
**daß** der Austrittsbereich (23), insbesondere die Austrittsöffnung des Wurstausgabekanals (13) auf den Darmdurchmesser abgestimmt ist.

8. Vorrichtung nach einem der vorhergehenden Ansprüche,
**dadurch gekennzeichnet,**
**daß** der Wursthalteeinrichtung (11) eine Halterollenanordnung, insbesondere ein Halterollenpaar nachgeordnet ist, wobei der Austrittsbereich (23), insbesondere die Austrittsöffnung des Wurstausgabekanals (13) und die Durchlaßöffnung der Halterollenanordnung aufeinander abgestimmt sind.

9. Vorrichtung nach einem der vorhergehenden Ansprüche,
**dadurch gekennzeichnet,**
**daß** die Wursthalteeinrichtung (11), insbesondere der Wurstausgabekanal (13) eine Länge aufweist, die kleiner als eine Wurstlänge ist.

10. Vorrichtung nach einem der vorhergehenden Ansprüche,
**dadurch gekennzeichnet,**
**daß** der Öffnungswinkel des Wurstausgabekanals (13) kleiner als 10° ist und bevorzugt etwa im Bereich von 5 bis 8° liegt.

11. Vorrichtung nach einem der vorhergehenden Ansprüche,
**dadurch gekennzeichnet,**
**daß** die Wursthalteeinrichtung (11) einen dem Wurstausgabekanal (13) vorgelagerten und sich in Richtung des Wurstausgabekanals (13) verjüngenden Eingangsbereich (15) aufweist.

12. Vorrichtung nach Anspruch 11,
**dadurch gekennzeichnet,**
**daß** der Eingangsbereich (15) direkt in den Wurstausgabekanal (13) übergeht.

13. Vorrichtung nach Anspruch 11 oder 12,
**dadurch gekennzeichnet,**
**daß** der Eingangsbereich (15) sich zumindest abschnittsweise trichterartig verjüngt.

14. Vorrichtung nach einem der Ansprüche 11 bis 13,
**dadurch gekennzeichnet,**
**daß** der Eingangsbereich (15) einen größeren Öffnungswinkel aufweist als der Wurstausgabekanal (13).

15. Vorrichtung nach einem der vorhergehenden Ansprüche,
**dadurch gekennzeichnet,**
**daß** die Innenwand des Wurstausgabekanals (13) als Gleitfläche ausgebildet ist.

16. Vorrichtung nach einem der vorhergehenden Ansprüche,
**dadurch gekennzeichnet,**
**daß** Mittel (17) zum Einbringen eines Gleitmediums in den Wurstausgabekanal (13) vorgesehen sind.

17. Vorrichtung nach einem der vorhergehenden Ansprüche,
**dadurch gekennzeichnet,**
**daß** als ein Gleitmedium für den Wurstausgabekanal (13) Wasser vorgesehen ist.

18. Vorrichtung nach einem der vorhergehenden Ansprüche,
**dadurch gekennzeichnet,**
**daß** die Wursthalteeinrichtung (11) wenigstens einen in den Wurstausgabekanal (13) mündenden Zufuhrkanal (17) für ein Gleitmedium aufweist, wobei bevorzugt der Zufuhrkanal (17) geneigt zur Längsachse (19) des Wurstausgabekanals (13) und insbesondere mit einer der Füllrichtung entgegengesetzten Komponente auf den Wurstausgabekanal (13) zu verläuft.

19. Vorrichtung nach einem der vorhergehenden Ansprüche,
**dadurch gekennzeichnet,**
**daß** die Wursthalteeinrichtung (11) einstückig ausgebildet ist.

20. Vorrichtung nach einem der vorhergehenden Ansprüche,
**dadurch gekennzeichnet,**
**daß** die Wursthalteeinrichtung (11) aus Kunststoff oder Edelstahl hergestellt ist.
